# EUROPÄISCHE PATENTANMELDUNG

(11) **EP 4 375 611 A1**
(43) Veröffentlichungstag der Anmeldung: **29.05.2024**
(21) Anmeldenummer: 23207952.5
(22) Anmeldetag: 06.11.2023
(51) Int. Cl.: F41G 7/22, G01S 7/41, G01S 13/22, G01S 13/524, G01S 13/72, G01S 13/88, F41H 11/02, G01S 13/02

(54) **VERFAHREN ZUM RADARGESTEUERTEN LENKEN EINES LENKFLUGKÖRPERS**

(30) Priorität: 23.11.2022 DE 102022004375
(71) Anmelder: Diehl Defence GmbH & Co. KG, 88662 Überlingen (DE)
(72) Erfinder: Koch, Volker, 90607 Rückersdorf (DE); Weltin, Ingo, 88682 Salem (DE); Kuhn, Thomas, 88633 Heiligenberg (DE)
(74) Vertreter: Diehl Patentabteilung

(57) **Zusammenfassung**

Die Erfindung betrifft ein Verfahren zum Lenken eines Lenkflugkörpers (2) in Richtung zu einem Oberflächenziel (4), bei dem der Lenkflugkörper (2) ein aktives Radar (16) zur Erkennung des Oberflächenziels (4) einsetzt.

Um auf ein rein präventives periodisches Ausweichmanöver des Lenkflugkörpers (2) im Endgame verzichten und damit Treibstoff sparen zu können, wird vorgeschlagen, dass das Radar (16) von einem an die Erkennung des Oberflächenziels (4) angepassten Zielmodus (T) auf einen auf einen Angreifer (18, 22) aus der Luft angepassten, sendeschemaveränderten Luftmodus zur Erkennung des Angreifers (18, 22) wechselt.

## Beschreibung

Die Erfindung betrifft ein Verfahren zum Lenken eines Lenkflugkörpers in Richtung zu einem Oberflächenziel, bei dem der Lenkflugkörper ein aktives Radar zur Erkennung des Oberflächenziels einsetzt.

Seezielflugkörper müssen in der Regel weite Strecken bis zu ihrem Ziel überwinden und hierbei - zumindest auf den letzten Kilometern - möglichst tief fliegen, um spät entdeckt zu werden. Zudem sind gegebenenfalls gegnerische Verteidigungen weiträumig zu umfliegen. Diese Randbedingungen erfordern viel Treibstoff, sodass die Reichweite durch den beschränkten Treibstoffvorrat eingeschränkt ist. Dieses Problem wird bei schweren Seezielflugkörpern mit einem Festbrennstofftriebwerk, wie einem Ramjet, verschärft.

Es ist daher eine Aufgabe der Erfindung, ein Verfahren zum treibstoffeffizienten Lenken eines Flugkörpers anzugeben und einen Flugkörper, der zum treibstoffeffizienten Lenken in der Lage ist.

Die auf das Verfahren gerichtete Aufgabe wird durch ein Verfahren der eingangs genannten Art gelöst, bei dem erfindungsgemäß das Radar von einem an die Erkennung des Oberflächenziels angepassten Zielmodus auf einen auf einen Angreifer aus der Luft angepassten, sendeschemaveränderten Luftmodus zur Erkennung des Angreifers wechselt.

Die Erfindung geht von der Überlegung aus, dass übliche im Unterschall fliegende Seezielflugkörper weniger Probleme mit ihrem Treibstoffverbrauch haben. Auch Ausweichmanöver im Unterschallbereich kurz vor dem Ziel zum Ausweichen von Abwehrflugkörpern kosten nicht so viel Treibstoff, dass dies die Missionsplanung und Missionsdurchführung erheblich beeinflusst. Zum Bewältigen sehr großer Reichweiten im Bereich von 500 km und mehr sollte ein Überschallflug ausgeführt werden, zweckmäßigerweise mit mehr als 3 Mach. Bei diesen Geschwindigkeiten ist der Treibstoffverbrauch ein kritischer Parameter, vor allem, da Ausweichmanöver mit dieser Geschwindigkeit zwar deutlich effektiver sind, aber ein Vielfaches an Treibstoff kosten, wie im Unterschallbereich.

Fliegt ein Lenkflugkörper sein Oberflächenziel an, insbesondere ein Seezielflugkörper ein Schiff, so wird sich das Oberflächenziel verteidigen und seinerseits Abwehrlenkflugkörper starten oder Geschosse verschießen, die auf den Lenkflugkörper zukommen. Zur Abwehr kann ein Seezielflugkörper in einem Bekämpfungsgebiet, in dem eine Verteidigung des Oberflächenziels zu erwarten ist, mit scharfen Kurven manövrieren, um solchen Angreifern zu entkommen. Solche engkurvigen Manöver erfordern jedoch im Überschallbereich viel Treibstoff. Es ist daher vorteilhafter, nicht generell, sondern nur im Bedarfsfall Ausweichmanöver zu fliegen, also wenn ein Angreifer auf den Lenkflugkörper zufliegt. Das bedingt jedoch, dass der Angreifer vom Lenkflugkörper erkannt und insbesondere lokalisiert wird.

Seezielflugkörper enthalten in der Regel ein aktives Radar als alleinigen oder zusätzlichen Sensor zur Vermessung des Oberflächenziels. Die Anforderungen an den Radarsucher sind weniger komplex, da große und relativ langsame Ziele zu erkennen sind. Einzig die Abstandsauflösung stellt eine etwas größere Herausforderung dar, da einzelne Ziele, wie Schiffe in einem Geschwader, voneinander zu trennen und auch vor einem Hintergrund auszulösen sind.

Zur Erkennung von Angreifern im Format von Lenkflugkörpern und insbesondere Geschossen sind hochqualitative Radare nötig, die bisher in Lenkflugkörpern nicht eingesetzt wurden. Mit hochintegrierten HF-Komponenten, ausreichend hohem TX/RX-Antennengewinn und großer Prozessorleistung der Radarsteuerung ist das Erkennen solcher Angreifer möglich. Möglich ist ein Dauerstrichradar, ein Mehrtonradar und insbesondere ein Pulsradar, da durch dieses - insbesondere als Einantennensystem und/oder als monostatisches System - die Sendezeit von der Empfangszeit getrennt und hierdurch eine Überkopplung eines Teils der Sendeleistung in den Empfangskanal vermieden werden kann. Unterstützend kann ein Empfangsverstärker mit logarithmischer Verstärkung eingesetzt werden, da hiermit nahe Ziele weniger und weitere Ziele mehr verstärkt werden können. Besonders vorteilhaft ist die Erzeugung der Sendefrequenz mittels eines Direktsynthesizers, wie ein Direct Digital Synthesizer

(DDS) digital in einem Rechner. Über eine Digital-Analog-Wandlerstufe kann die Sendefrequenz an das Frontend zur weiteren Aufbereitung und Pulsformung weitergeleitet werden. Auf diese Weise kann eine Pulsfolgefrequenz digital eingestellt und erzeugt werden. Sie lässt sich ebenfalls nahezu verzugszeitlos ändern.

Mithilfe des Radars können die Position und die Differenz- bzw. Relativgeschwindigkeit eines Angreifers relativ zum Lenkflugkörper bestimmt werden, beispielsweise mit einem Geschwindigkeitsvektor. Daraus kann ein voraussichtlicher Treffpunkt in Raum und Zeit ermittelt werden. Anhand dessen berechnet der Lenkflugkörper eine Fluglenkung derart, dass der Lenkflugkörper dem Angreifer ausweicht und der Treffpunkt umflogen wird. Dies kann repetitiv wiederholt werden, sodass der Lenkflugkörper dem vermutlich nachsteuernden Angreifer kontinuierlich bzw. repetitiv korrigierend ausweicht. Mittels einer geeigneten Ausweichstrategie, die die Flugeigenschaften des Angreifers berücksichtigen kann, kann ein Ausweichen mit hohen Erfolgsaussichten erreicht werden.

Der Zielmodus ist ein Radarmodus, der an die Erkennung des Oberflächenziels angepasst ist und zum Erfassen von Oberflächenfahrzeugen, wie Landfahrzeugen und/oder Schiffen, dient. Das Ziel wird als solches erkannt und verfolgt. Der Luftmodus ist auf einen Angreifer aus der Luft angepasst und in seinem Sendeschema der aktiven Radarstrahlung anders als der Zielmodus. Das Sendeschema kann ein Schema von Pulsen sein, in denen der Radarstrahl ausgesandt wird, und durch Pulslänge, Pulsamplitude und/oder Pulsfolgefrequenz eines Zugs von Radarpulsen bestimmt sein. Auch die Radarfrequenz kann Teil des Sendeschemas sein. Im Luftmodus wird ein Angreifer aus der Luft gesucht und kann nach dessen Auffinden verfolgt werden, beispielsweise im Zeit- und Frequenzbereich.

Der Lenkflugkörper ist zweckmäßigerweise ein Oberflächenzielflugkörper zum Bekämpfen eines als Seeziel oder als landgestütztes Oberflächenziel ausgeführten Ziels, beispielsweise ein Seezielflugkörper. Sein Triebwerk kann im Schub steuerbar sein und es kann ein Luft atmendes Triebwerk sein. Möglich ist auch ein im Schub steuerbares Festbrennstofftriebwerk, beispielsweise ein Ramjet. Der Treibstoff des Flugkörpers kann Flüssigtreibstoff oder Festbrennstoff sein. Der Flugkörper kann ein unbemanntes Luftfahrzeug sein. Der Flugkörper ist zweckmäßigerweise ein Überschallflugkörper, insbesondere ein Überschallseezielflugkörper. Er ist vorteilhafterweise für Fluggeschwindigkeiten über 2,5 Mach, insbesondere über 3 Mach, ausgeführt, sodass er im mehrfachen Überschallflug, also im Überschallflug mit mehreren Mach, auf das Seeziel zu fliegen kann. Der Lenkflugkörper verfügt zweckmäßigerweise über die Fähigkeit zum Flug in Flughöhen über 15 km, insbesondere über 20 km, und hat insbesondere eine Reichweite von über 1.000 km.

Das Radar ist zweckmäßigerweise ein Digitalradar, also ein zumindest weitgehend digital arbeitendes Radar, und kann eine Digitalantenne, also eine elektronisch schwenkbare Antenne, umfassen. Das Ausrichten des Sendestrahls bzw. der Sendekeule kann digital und mechanikfrei erfolgen, wodurch eine neue Ausrichtung des Sendestrahls im ein- oder zweistelligen Mikrosekundenbereich erfolgen kann. Hierbei kann der Sendestrahl in seiner Ausrichtung springen, sodass zwischen angestrahlten Objekten radarfreier Raum ist. Es kann das Verfahren des Sequential Lobing Anwendung finden. Interne Mess- und Regelschleifen der Digitalantenne sorgen für eine leistungsoptimale Ausleuchtung der erfassten Zielobjekte, dies gilt sowohl für Oberflächenziele als auch Luftziele.

In einer Anfangsphase des Verfahrens kann das Radar in einem passiven Zielmodus arbeiten. Das Radar ist ein Passivradar für eine passive Verfolgung des Ziels, beispielsweise anhand dessen, hierfür in der Frequenz geeigneten, Radarstrahlung. Auf eine aktive Aussendung eines Radarstrahls wird insofern verzichtet. Wurde der Lenkflugkörper vom Oberflächenziel entdeckt, kann der Modus vom passiven Zielmodus auf einen aktiven Zielmodus gewechselt werden, beispielsweise wenn der Lenkflugkörper vom Ziel bereits aktiv angestrahlt wird. Das Radar sendet aktiv einen Radarstrahl zum Oberflächenziel zur Erkennung und Verfolgung des Ziels. Während des Anflugs auf das Oberflächenziel kann das Sendeschema auf eine erforderliche Bandbreite und Zielverweilzeit angepasst werden, um den notwendigen Kontrast zu erreichen. Für die Erstentdeckung von Schiffen ist die Eindeutigkeit der Entfernungsbestimmung wichtig, sodass es vorteilhaft ist, die Pulsfolge an die vermutete Entfernung zum Oberflächenziel anzupassen, um eine eindeutige Laufzeit aus dem Empfangssignal zu erhalten. Zur Erkennung des Oberflächenziels liegt das Sendeschema in seiner Pulsfolgefrequenz zweckmäßigerweise zwischen 0,5 und 30 Kilohertz, insbesondere im einstelligen Kilohertzbereich. Der zur Verfolgung des Oberflächenziels verwendete Pulsfrequenzbereich wird im Folgenden als Niederfrequenzbereich bezeichnet. Ist die Entdeckung des Oberflächenziels erfolgt, so können Zielparameter, wie Position und ggf. Geschwindigkeit, Ausdehnung und Form, gespeichert werden, sodass die Verfolgung des Ziels später wieder aufgenommen werden kann.

Nach erfolgter Detektion des Oberflächenziels im umgebenden Seeclutter durch das Radar bzw. dessen Radarsensor kann mittels digitaler Pulsformung und insbesondere digitaler Frequenzaufbereitung eine im Wesentlichen verzugszeitfreie Umschaltung auf einen auf einen Angreifer aus der Luft angepassten, sendeschemaveränderten Luftmodus zur Erkennung eines Angreifers gewechselt werden, beispielsweise zur Erkennung eines Abwehrflugkörpers oder anfliegender Geschosse zwischen dem Oberflächenziel und dem Lenkflugkörper. Der Wechsel vom Zielmodus zum Luftmodus kann unmittelbar nach der Detektion des Oberflächenziels erfolgen. Ist dieses jedoch noch so weit vom Lenkflugkörper entfernt, dass ein Angriff nicht zu erwarten ist, kann der Wechsel zum Luftmodus verzögert werden. Beispielsweise ist eine Bekämpfungsentfernung festgelegt, ab der mit einem Angriff gerechnet werden kann. Erreicht der Lenkflugkörper die Bekämpfungsentfernung, so kann der Wechsel zum Luftmodus erstmalig erfolgen. Eine andere Möglichkeit besteht in der Triggerung des Wechsels durch eine externe Warnung, also durch eine Nachricht von extern an den Lenkflugkörper, und/oder ein Signal eines bordeigenen, also internen Sensors, das auf einen Angriff bzw. einen herannahenden Angreifer hinweist.

Im Luftmodus steht zunächst das Erkennen des Angreifers als solcher in einem Lufterkennungsmodus im Vordergrund. Hierfür wird der Luftraum nach Angreifern gescannt. Zum Scannen des Luftraums muss nicht der gesamte Halbraum vor dem Lenkflugkörper gescannt werden. Da ein Angreifer zumeist vom Oberflächenziel aus startet oder von einem anderen Fahrzeug in der Nähe des Oberflächenziels, ist es vorteilhaft, wenn die Richtung des Oberflächenziels als Führungsrichtung zum Scannen des Luftraums verwendet wird. Es kann also die Richtung zum Oberflächenziel als Richtungsgeber zum Aufspüren eines Angreifers verwendet werden. Es ist ausreichend, wenn der Luftraum zwischen Oberflächenziel und Lenkflugkörper überwacht wird, wobei ein Beobachtungskegel von ± 5° um die Sichtrichtung des Lenkflugkörpers zum Oberflächenziel, insbesondere von maximal ± 3°, ausreichend ist.

Von einem Oberflächenziel abgeschossene Abwehrflugkörper oder Geschosse haben eine um mehrere Größenordnungen niedrigere Radarsignatur als beispielsweise ein Schiff. Mit üblichen Radarmessungen lassen sich solche Angreifer nicht vom Hintergrund bzw. Rauschen unterscheiden. Allerdings bewegen sie sich mit hohen Relativgeschwindigkeiten auf den Lenkflugkörper zu, sodass sich ihre Dopplersignatur, also die Verschiebung der Frequenz des Echos relativ zur ausgesendeten Frequenz, von der Umgebung, dem Hintergrund und auch dem Oberflächenziel deutlich unterscheidet.

In einer vorteilhaften Ausführungsform der Erfindung wird daher eine Erkennung eines Angreifers, insbesondere eine erstmalige Erkennung des Angreifers, mithilfe eines Dopplermodus des Radars ausgeführt, bei dem die Dopplersignatur des Empfangssignals des Radars, in dem die Dopplersignatur des Angreifers enthalten ist, ausgewertet wird. Dieser Modus ist zweckmäßigerweise ein Pulsmodus, um eine Überkopplung eines Teils der Sendeleistung in den Empfangskanal zu vermeiden. Aufgrund des Nyquist-Kriteriums sollte die Pulsfolgefrequenz des im Dopplermodus verwendeten Dopplerschemas der Pulse mindestens das Doppelte der Dopplerfrequenz betragen, insbesondere der maximal zu erwartenden Dopplerfrequenz. Die Pulsfolgefrequenz liegt beispielweise in einem im Folgenden als Hochfrequenzbereich bezeichneten Bereich von mehr als 100 kHz. Alleine durch diese Pulsfrequenzerhöhung vom Niederfrequenzbereich zum Hochfrequenzbereich findet im Vergleich zum Zielmodus eine Sendeschemaveränderung des Radars statt.

Diese Frequenz ist zu hoch, um aus der Laufzeitbestimmung ein Entfernungssignal zu erhalten, aus dem die Entfernung von mehreren Kilometern eindeutig bestimmt werden kann. Insofern überwacht der Lenkflugkörper den Luftraum zwischen sich und dem Oberflächenziel mithilfe des Luftmodus, der einen in der Entfernung zum Oberflächenziel in der Pulsfolgefrequenz uneindeutiges Dopplerschema enthält. Hierbei ist es sinnvoll, das Empfangssignal nur auf Frequenzerhöhungen abzuscannen, da eine negative Relativgeschwindigkeit nicht relevant ist. Darüber hinaus kann das Scannen auf das in der Frequenz höhere Dopplersignal auf denjenigen Frequenzbereich beschränkt bleiben, der einer höheren Relativgeschwindigkeit als die Fluggeschwindigkeit des Lenkflugkörpers zugeordnet wird. Auf diese Weise lassen sich auch Signaturen des Hintergrunds, des Meeres und des Oberflächenziels abtrennen. Der Frequenzbereich kann noch weiter eingeschränkt werden, indem ein Geschwindigkeitsband des Angreifers vorgegeben wird und nur der diesem Geschwindigkeitsband zugeordnete Frequenzbereich auf das Dopplersignal abgescannt wird.

Wenn der Luftraum zwischen dem Lenkflugkörper und dem Oberflächenziel ausreichend gescannt wurde, kann zum Zielmodus zurückgekehrt werden, um das Ziel wieder bzw. weiter zu verfolgen. Der Wechsel zwischen dem Zielmodus und dem Luftmodus kann nach der Erkennung des Oberflächenziels periodisch erfolgen, sodass das Oberflächenziel periodisch verfolgt wird und im Wechsel dazu ein Angreifer periodisch gesucht wird. Dies kann als Track-While-Scan bezeichnet werden: Der Luftraum wird gescannt, während - im Sinne des periodischen Wechsels - das Oberflächenziel weiter verfolgt wird. Es ist insofern vorteilhaft, wenn der Lenkflugkörper periodisch zwischen einem Verfolgen des Ziels im Oberflächenmodus und dem Scannen des Luftraums im Luftmodus wechselt.

Mithilfe des Lufterkennungsmodus und dem Dopplerverfahren wird der Angreifer als solcher erkannt. Zusätzlich wurde seine Relativgeschwindigkeit zum Lenkflugkörper gemessen. In einem nachfolgenden Schritt gilt es, den Angreifer in einem Luftortungsmodus zu lokalisieren. Lufterkennungsmodus und Luftortungsmodus sind zwei Modi des Luftmodus. Im Luftortungsmodus wird die Entfernung des Angreifers zum Lenkflugkörper bestimmt. Da es sinnvoll ist, die Relativgeschwindigkeit weiterhin zu messen, ist es vorteilhaft, wenn das erstmalige Erkennen des Angreifers eine Erweiterung des Luftmodus auf zumindest zwei verschiedene Pulsschemata triggert. Mit einem der Pulsschemata kann die Relativgeschwindigkeit des Angreifers ermittelt werden, das andere Pulsschema dient der Bestimmung der Entfernung des Angreifers zum Lenkflugkörper. Eine Möglichkeit besteht darin, die Pulsfolgefrequenz des Entfernungsschemas so niedrig zu halten, dass aus der Laufzeitbestimmung eine eindeutige Entfernungsbestimmung möglich ist. Da die Entfernung des Lenkflugkörpers zum Angreifer kleiner ist als zum Oberflächenziel, reicht die Reduzierung der Pulsfolgefrequenz auf einen mittleren Entfernungsbereich, der im Folgenden als Mittelfrequenzbereich bezeichnet wird. Die Angreiferentfernung kann eindeutig gemessen werden, die Lage der Seeoberfläche im Hintergrund wird unter Umständen nicht mehr eindeutig sein, kann aber aufgrund der bekannten Parameter der Messungen des Zielmodus im Niederfrequenzbereich erkannt und ggf. aus der Entfernungsmessung des Angreifers entfernt werden.

Genügt die Pulsfolgefrequenz im Mittelfrequenzmodus nicht den Anforderungen der eindeutigen Entfernungsmessung, kann die Pulsfolgefrequenz geringfügig verändert werden. Ein "Springen" des Entfernungsergebnisses entsteht, da sich der zeitliche Bezug zum nächsten gesendeten Puls ändert. Mittels der Frequenzänderung kann die eindeutige Lage des Angreiferechos im Zeitbereich und damit in Entfernung und somit die eindeutige Angreiferentfernung ermittelt werden. Der Unterschied der Pulsfrequenzen kann weniger als 10% betragen, sodass beide Pulsschemata gemeinsam zur Bestimmung der Entfernung herangezogen werden können. Zur Erhöhung der Eindeutigkeit der Zuordnung zur aktuellen Pulsperiode ist auch die Variation der Sendeleistung, der Radarfrequenz und/oder der Pulslänge vorteilhaft, beispielweise von Puls zu Puls oder von Dwell zu Dwell, wobei ein Dwell ein Pulszug vorgegebener Länge ist. Es ist daher vorteilhaft, wenn eine Entfernungsbestimmung des Angreifers unter Verwendung verschiedener Pulslängen, Pulscodes, Radarfrequenzen, Pulsphasen und/oder Pulsamplituden innerhalb eines Dwells oder von Dwell zu Dwell erfolgt. Diese vier Größen können wahlweise einzeln oder in Kombination miteinander gewählt werden.

Werden mehrere Angreifer erkannt, so kann es sein, dass die Entfernungsmessung auch mit einem Frequenzjittering, also einer geringen Variation der Pulsfrequenz, nicht für beide Angreifer eindeutig ist. Hier kann eine Erhöhung der Anzahl der unterschiedlichen Pulsfolgefrequenzen Abhilfe schaffen, wodurch die Eindeutigkeit wieder hergestellt werden kann. Es ist daher vorteilhaft, wenn das Erkennen eines weiteren Angreifers eine Erweiterung des Luftmodus auf eine größere Anzahl verschiedener Pulsschemata triggert. Diese weisen zweckmäßigerweise jeweils eine andere Pulsfolgefrequenz auf.

Der Luftmodus kann den Lufterkennungsmodus mit Pulsfolgen im Hochfrequenzbereich und den Luftortungsmodus mit Pulsfolgen im Mittelfrequenzbereich enthalten. Die Frequenzen können zusätzlich verändert werden, beispielsweise von Dwell zu Dwell, um die Entfernungseindeutigkeit zu erhalten. Es ist insofern vorteilhaft, wenn der Luftmodus mehrere in der Pulsfolgefrequenz unterschiedliche Pulsschemata aufweist, die einander abwechseln. Bei einem Mehrfachangriff kann eine noch weitergehende Ausweitung der Pulsschemata erfolgen. Auch wenn die Ergebnisqualität einer Messung sich als ungenügend erweist, kann die Anzahl der verschiedenfrequenten Pulsschemata ausgeweitet werden.

Mittels der Entfernungsmessung alleine kann der Ort des Angreifers relativ zum Lenkflugkörper noch nicht bestimmt werden, da die Winkelbestimmung des Angreifers relativ zu einer Bezugsrichtung, beispielsweise der Längsrichtung oder Flugrichtung des Lenkflugkörpers, fehlt. Der Luftortungsmodus kann daher ein Verschwenken der Radarkeule enthalten, insbesondere ein digitales Verschwenken. Hierdurch kann die Winkellage zum Ort des Angreifers, , etwa in Kugelkoordinaten θ, φ, bestimmt werden. Das zugrunde gelegte Kugelkoordinatensystem mit kartesischen Koordinaten im Ursprung kann beispielsweise identisch mit einem Referenzkoordinatensystem mit einer möglichen Ursprungslage im Schwerpunkt des Lenkflugkörpers sein. Die x-Achse des Kugelkoordinatensystems kann dabei mit der Längsachse des Lenkflugkörpers zusammenfallen. Die y- und z-Achse orientieren sich gemäß Rechte-Hand-Regel bzw. Drei-Finger-Regel. Weitere Hilfskoordinatensysteme innerhalb des Lenkflugkörpers, wie etwa für die Antenne, können definiert sein, deren Winkelinformationen dann über entsprechende Transformationsregeln in die Winkel θ, φ des besagten Kugelkoordinatensystems überführt werden können. Es kann beispielsweise die vorzugsweise elektronische Umschaltung des Antennendiagramms innerhalb der Antennenkeulenbreite (3 dB) vorgenommen werden. Das kann in einem zeitparallelen Monopulsbetrieb und/oder einem zeitsequenziellen Sequential-Lobing-ähnlichen Betrieb erfolgen. Auf diese Weise lassen sich die Angreiferablagen von der geometrischen Antennenmittelachse messen und die Angreiferposition auch im Winkel genau bestimmen.

Die Rückkehr zum Zielmodus, z.B. zur Schiffsdetektion, ist jederzeit möglich, und die Zieldaten lassen sich nach oder während der Luftortung aktualisieren, vorzugsweise unter Einbeziehung der geänderten Aspektwinkel bzw. Sichtlinien zum Schiff. Die eigentliche Aufgabe der Zielbekämpfung kann damit weitergeführt werden. Es ist insofern vorteilhaft, wenn Zielmodus und Luftmodus einander abwechseln. Hierbei können mehrere verschiedene Pulsschemata des Luftmodus vor einem nachfolgenden Zielmodus durchlaufen werden. So kann der Angreifer in Relativgeschwindigkeit und Ort bestimmt und das Ziel weiter verfolgt werden.

Bei mehreren Modi, wie Zielmodus, Luftentfernungsmodus und Luftgeschwindigkeitsmodus, kann ein Modus oder mehrere Modi mehrere Pulsschemata haben, die sich beispielsweise von Dwell zu Dwell unterscheiden. So können mehrere Schemata eines Modus nacheinander und insbesondere periodisch durchlaufen werden, bevor der nächste Modus beginnt. Auch die Modi können nacheinander und insbesondere periodisch durchlaufen werden.

Je nach Angriffsituation ist es sinnvoll, die verschiedenen Modi zu priorisieren und nicht alle nacheinander zu durchlaufen. So können beispielsweise mehrere Luftmodi periodisch wiederholt werden, wobei der Zielmodus ausgelassen wird. Dies ist insbesondere bei einer nahen Position des Angreifers zum Lenkflugkörper sinnvoll. Es wird daher vorgeschlagen, dass der Luftmodus einen Luftgeschwindigkeitsmodus und einen Luftentfernungsmodus enthält und der Lenkflugkörper den Angreifer mit diesen beiden Luftmodi bis zu einem Vorbeiflug verfolgt unter Weglassen des Zielmodus, und dieser erst nach dem Vorbeiflug in den Modenzyklus wieder aufgenommen wird.

Auch die verschiedenen Pulsschemata des Luftmodus, insbesondere des Luftgeschwindigkeitsmodus oder des Luftentfernungsmodus, können priorisiert und in Abhängigkeit von ihrer Priorität durchlaufen werden, sodass ein niederpriorisiertes Schema weniger oft durchlaufen wird, als ein höher priorisiertes Schema. Insofern ist es vorteilhaft, wenn der Luftmodus mehrere Pulsschemata aufweist, die hintereinander in der Reihenfolge einer Gefahrenpriorität durchlaufen werden. Jedem Schema kann je nach Bedrohungsszenario eine Priorität gegeben werden.

Je nach Angreifer und dessen Entfernung zum Lenkflugkörper und zusätzlich je nach atmosphärischer Lage kann das Radarecho des Angreifers sehr unterschiedlich ausfallen. Um zu ausreichenden Ergebnissen in der Relativgeschwindigkeit und/oder Entfernung zu gelangen, ist es zweckmäßig, dass eine Pulsamplitude und Pulsbreite von Radarpulsen des Luftmodus auf das abgeschätzte Echo vom Angreifer abgestimmt sind. Es ist vorteilhaft, auch die Pulscodierung und/oder Pulsphase auf das Echo abzustimmen.

Besonders gering ist die Radarsignatur von Geschossen. Erschwerend kommt deren hohe Relativgeschwindigkeit hinzu, die in aller Regel deutlich größer als von triebwerkgetriebenen Angreifern ist, und deren schnelle Abfolge hintereinander im Salvenverschuss. Allerdings ist die Reichweite von Geschossen auf wenige Kilometer beschränkt, sodass die dem Angreifer in Form eines Geschosses innewohnende Entfernungsinformation zur Berechnung sowohl eines geeigneten Pulsschemas in Pulsfolgefrequenz, Pulslänge und/oder Pulsamplitude als auch zur Berechnung der Entfernung verwendet werden kann. Auch die Abschusskadenz und damit die Hintereinanderreihung mehrerer Geschosse, also ihr Abstand zueinander, kann als Information verwendet werden. Es ist daher vorteilhaft, wenn der Angreifer mehrere hintereinander fliegende Geschosse enthält, dass der Lenkflugkörper deren Entfernung unter Verwendung der Abschusskadenz der Geschosse ermittelt.

Generell kann der Lenkflugkörper nach Erkennung des Angreifers eine Ausweichlenkung initiieren. Bei erkannten Geschossen kann deren ballistische und daher nahezu geradlinige Bahn bei der Berechnung des Ausweichmanövers berücksichtigt werden.

Die Erfindung ist außerdem gerichtet auf einen Lenkflugkörper mit einem Suchkopf, der ein aktives Radar zur Erkennung eines Oberflächenziels enthält, und einer Steuereinheit, die zum Lenken eines Flugs in Richtung zu einem Oberflächenziel vorbereitet ist.

Ein Flugkörper, der zum treibstoffeffizienten Lenken in der Lage ist, kann erreicht werden, wenn erfindungsgemäß die Steuereinheit dazu vorbereitet ist, das Radar von einem an die Erkennung des Oberflächenziels angepassten Zielmodus auf einen auf einen Angreifer aus der Luft angepassten, sendeschemaveränderten Luftmodus zur Erkennung des Angreifers wechseln zu lassen. Die Steuereinheit kann die Radarsteuerung mit umfassen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Lenkflugkörper in einem Anflug auf ein Schiff als Ziel,
- FIG 2: einen vom Ziel aufgestiegenen Angreifer gegen den Lenkflugkörper und
- FIG 3: ein Zeitdiagramm verschiedener Dwells von Radarpulsen des Lenkflugkörpers zur Verfolgung des Ziels und zur Entdeckung und Ortung des Angreifers.

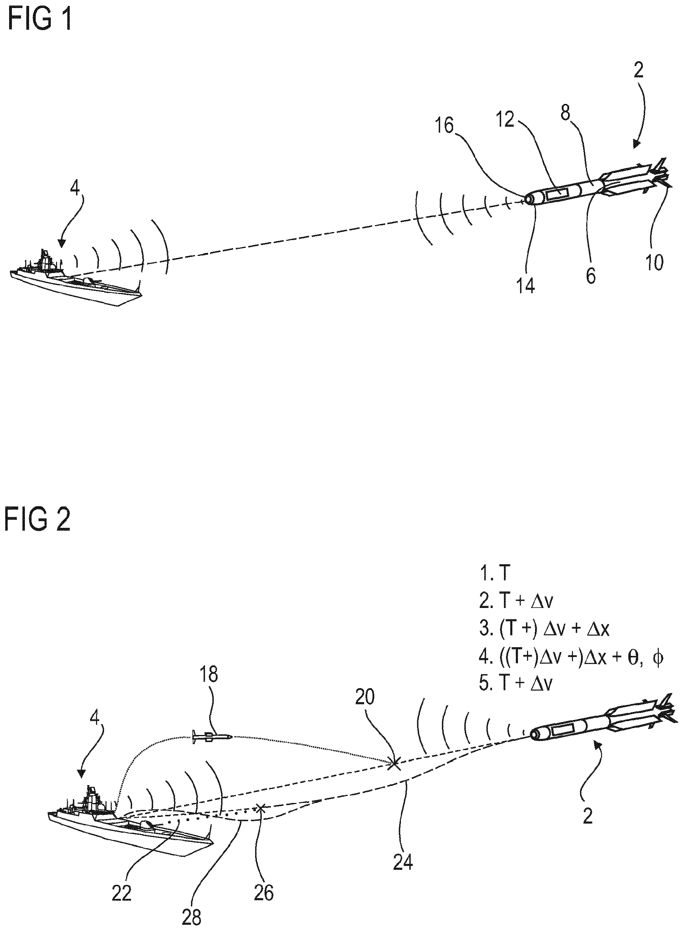

FIG 1 zeigt einen Lenkflugkörper 2 im Anflug auf ein Oberflächenziel 4 in Form eines Schiffs. Der Lenkflugkörper 2 ist unter anderem mit einem Raketenmotor 6 mit Festbrennstoff, einem Wirkkörper 8 zum Bekämpfen des Oberflächenziels 4, Lenkflügeln 10 zum Kurvenlenken des Flugs des Lenkflugkörpers 2, einer Steuereinheit 12, einem Suchkopf 14 und einem Radar 16 ausgestattet. Die Steuereinheit 12 kann mehrere Untereinheiten umfassen und steuert den Suchkopf 14, das Radar 16 und den Flug des Lenkflugkörpers 2 mithilfe der Lenkflügel 10 und unter Verwendung der Signale des Radars 16. Das Radar 16 ist ein Pulsradar, wobei auch ein Dauerstrichsignal erzeugt werden kann, beispielsweise wenn ein sehr nahes Objekt verfolgt wird. Der Nachteil eines Übersprechens kann durch eine geringere Sendeleistung verringert oder umgangen werden. Das Radar 16 weist ein Einantennensystem und einen Direktsynthesizer auf, durch den die Sendefrequenz in einem Rechner, z.B. einem Teil der Steuereinheit 12, erzeugt wird. Über eine Digital-Analog-Wandlerstufe werden die digital erzeugten Sendepulse zur Aussendung an das Frontend mit der monostatischen Antenne geleitet. Das Radar 16 ist dazu vorbereitet, anhand von digitalen Befehlen mit seiner Antenne die Ausrichtung der Sendekeule und/oder seiner Empfangsrichtung zu steuern, sodass eine oder beide springend verschwenkt werden können, wie z.B. beim Sequential Lobing.

FIG 1 zeigt den Lenkflugkörper 2 im oder kurz vor dem Endgame des Flugs, der dem Midgame folgt, in dem der Lenkflugkörper in großer Höhe von über 10 km und über eine Strecke von über 500 km auf das Oberflächenziel 4 zugeflogen ist. Der Beginn des Endgame kann durch einen Flug dicht über der Oberfläche, auf dem sich das Oberflächenziel 4 befindet, erfolgen. Es ist auch möglich, dass das Endgame bereits vor oder während eines Abstiegs aus großer Höhe erfolgt, beispielsweise während eines Steilflugs. Das Aufspüren des Lenkflugkörpers 2 erfolgt durch ein aktives Radar des Oberflächenziels 4. Auch bei Erreichen einer Bekämpfungsentfernung, in welcher der Lenkflugkörper 2 von einem Angreifer vom oder aus der Nähe des Oberflächenziels 4 angegriffen werden kann, fliegt der Lenkflugkörper 2 in zumindest im Wesentlichen gerader Linie direkt auf das Oberflächenziel 4 zu und vermeidet präventive Ausweichmanöver, wie beispielsweise ein periodisches Ausweichmanöver. Hierdurch wird die verbleibende Flugzeit zum Oberflächenziel 4 verringert und vor allem Treibstoff gespart.

Hat ein aktives Radar des Oberflächenziels 4 oder eines anderen Fahrzeugs in der Nähe des Oberflächenziels 4 den Lenkflugkörper 2 erfasst und verfolgt diesen, so verfolgt das Radar 16 des Lenkflugkörpers 2 seinerseits zunächst in einem Passivmodus das Oberflächenziel 4 anhand dessen aktiver Radarstrahlung. Das Verfolgen des Lenkflugkörpers 2 durch das aktive Radar des Oberflächenziels 4 kann jedoch entweder sofort oder zusätzlich entfernungsabhängig zum Oberflächenziel 4 die Aktivierung des aktiven Radars 16 triggern, das nun das Oberflächenziel 4 aktiv beleuchtet, wie in FIG 1 anhand der symbolisierten Radarstrahlung des Lenkflugkörpers 2 angedeutet ist. Nun verfolgt der Lenkflugkörper 2 das Oberflächenziel 4 aktiv mit einem Zielmodus des Radars 16. Zunächst bleibt das Radar 16 im Zielmodus, in dem die Pulsfrequenz der aktiven Radarstrahlung auf die Eindeutigkeit in der Entfernungsbestimmung des Oberflächenziels 4 ausgelegt ist, sodass der Lenkflugkörper 2 kontinuierlich bzw. schnell periodisch die Entfernung zum Oberflächenziel 4 ermittelt. Durch die große Entfernung zwischen Lenkflugkörper 2 und Oberflächenziel 4 ist die Radarpulsfolge im Niederfrequenzbereich. Über eine Verschwenkung des aktiven Radarstrahls und/oder der Empfangsrichtung kann die Richtung bzw. der Ort des Oberflächenziels 4 relativ zur Lage des Lenkflugkörpers 2 im Raum bestimmt werden, beispielsweise in Kugelkoordinaten θ, φ. Die Verschwenkung erfolgt dabei innerhalb einer Keulenbreite von 3 dB oder weniger, so dass die Kugelkoordinaten θ, φ eindeutig bestimmbar sind. Darüber hinaus besteht auch währenddessen die Möglichkeit einer eindeutigen Entfernungsmessung r zum Ort des Oberflächenziels 4.

Erreicht der Lenkflugkörper 2 eine Bekämpfungsentfernung zum Oberflächenziel 4, innerhalb derer er mit einem Angreifer rechnen muss, der aktiv auf ihn zufliegt, aktiviert der Lenkflugkörper 2 bzw. dessen Radar 16 dessen Luftmodus, in dem der Luftraum zwischen Lenkflugkörper 2 und Oberflächenziel 4 auf einen Angreifer abgesucht wird. Dieser Radarmodus ist in FIG 2 schematisch wiedergegeben: In der ersten Phase, die in FIG 2 mit "T" angegeben ist, wird ausschließlich der Zielmodus oder Targetmodus verwendet, in dem das Oberflächenziel 4 verfolgt wird. Andere Modi, die in diesem Zusammenhang nicht weiter relevant sind, können dem vorangegangen sein. In der zweiten Phase, dem Lufterkennungsmodus Δv, der die erste Phase des Luftmodus sein kann, wird nach einem Angreifer 18 gesucht, der in FIG 2 zwar dargestellt ist, jedoch in dieser Phase noch nicht vorhanden sein muss oder vom Lenkflugkörper 2 noch nicht entdeckt wurde. Im Gegensatz zum Oberflächenziel 4 sind Radarsignaturen von Angreifern 18 in Form von Abwehrflugkörpern oder sogar von Angreifern 22 in Form von Geschossen jedoch sehr klein, üblicherweise mehrere Größenordnungen geringer als von einem Schiffsziel. Daher ist ein Angreifer 18, 22 in Form eines Abwehrflugkörpers oder sogar in Form eines oder mehrerer Geschosse schwer im Radarsignal zu erkennen. Allerdings bewegt sich ein vom Oberflächenziel 4 oder dessen Umgebung gestarteter Angreifer 18, 22 mit vergleichsweise hoher Annäherungsgeschwindigkeit in Richtung des Radars 16 auf einen Kollisionspunkt 20 zu. Aufgrund der Unterschiede der Relativgeschwindigkeit zwischen Lenkflugkörper 2 und einerseits der Oberfläche und dem Oberflächenziel 4 und andererseits dem Angreifer 18, 22 ist der Angreifer 18, 22 im Dopplerspektrum eindeutig von der Oberfläche und dem Oberflächenziel 4 als unterschiedliche Dopplerquelle trennbar.

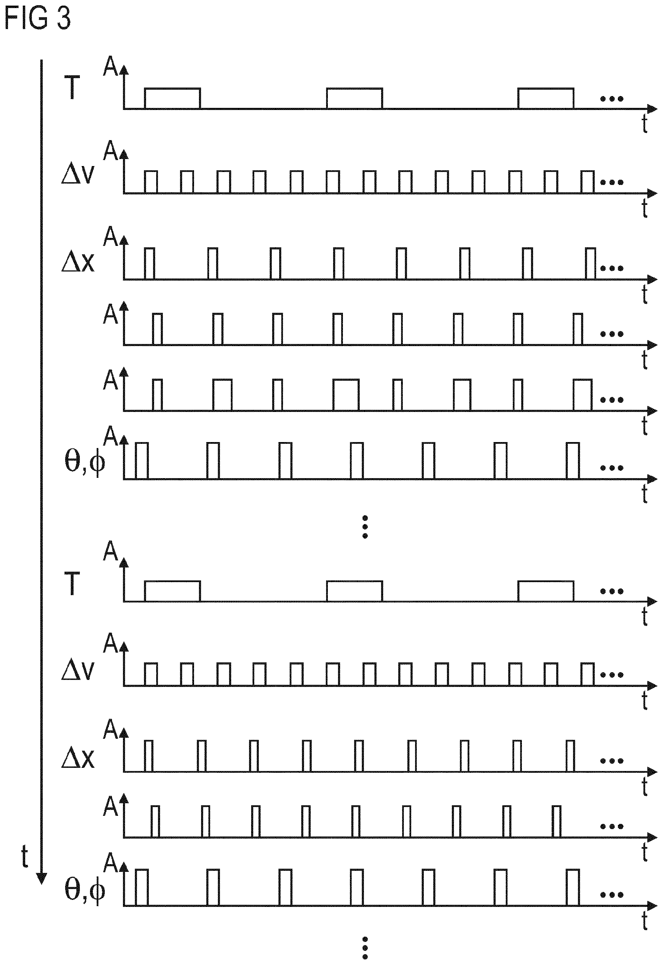

Der Lufterkennungsmodus Δv zeichnet sich insofern dadurch aus, dass das Radar 16 in einem Relativ- oder Differenzgeschwindigkeitsmodus arbeitet, der in FIG 2 mit Δv bezeichnet ist. Der Raum zwischen Lenkflugkörper 2 und Oberflächenziel 4 wird auf zumindest einen Angreifer 18, 22 abgesucht, dessen Relativgeschwindigkeit zum Lenkflugkörper 2 eine Geschwindigkeitsschwelle überschreitet, die bei einer Geschwindigkeit liegen kann, die um einen vorbestimmten Betrag höher als die aktuelle Fluggeschwindigkeit des Lenkflugkörpers 2 ist. Fliegt der Lenkflugkörper 2 mit z.B. 1.000 m/s auf das Oberflächenziel 4 zu und ist der vorbestimmte Betrag beispielsweise 100 m/s, so liegt die Geschwindigkeitsschwelle dann bei 1.100 m/s. Mithilfe des Dopplereffekts wird im Empfangssignal des Radars 16 nach Signalen gesucht, die in ihrer Radarfrequenz so in die Höhe verschoben sind, dass sie auf ein Objekt hindeuten, das sich mit mehr als der Geschwindigkeitsschwelle dem Lenkflugkörper 2 nähert. Im hohen Frequenzbereich kann in gleicher Weise eine Geschwindigkeitsschwelle festgelegt werden, die zweckmäßigerweise höher als alle sinnvollen Fluggeschwindigkeiten von Angreifern 18, 22 ist. Auf diese Weise wird ein Frequenzband geschaffen, innerhalb dessen die Dopplersignatur eines Angreifers 18, 22 gesucht wird. Die Suche kann sich auf dieses Frequenzband beschränken. Zur eindeutigen Darstellung der Situation im Dopplerbereich wird eine entsprechend hohe Pulswiederholfrequenz gewählt, und das Radar 16 arbeitet im Hochfrequenzbereich. Dies ist in FIG 3 dargestellt.

FIG 3 zeigt ein Diagramm, in welchem die Amplitude A des ausgesendeten Radarsignals über die Zeit t über viele Pulszüge, auch Dwells genannt, dargestellt ist. In jedem Pulszug sind mehrere Pulse über die Zeit t dargestellt, wobei die Pulszüge jeweils nacheinander, also in FIG 3 von oben nach unten, durchlaufen werden, sodass eine doppelte Zeitachse entsteht: einmal von links nach rechts für jeden Pulszug, und einmal von oben nach unten für die Pulszüge nacheinander. Verschiedene Modi des Radars 16 zeichnen sich durch verschiedene Pulszüge bzw. Dwells aus, die sich in der Pulsfrequenz der Radarpulse eines Dwells unterscheiden. Als weitere Unterscheidungsmerkmale sind Pulsbreite in der Zeit, Pulsamplitude in der Sendeleistung und/oder Radarfrequenz in der Frequenz der Radarstrahlung der Pulse möglich. Auch eine Pulsphasenmodulation ist möglich, z.B. eine Codierung von Pulsen zur Markierung bzw. Unterscheidung von Pulsen, beispielsweise mittels Pulsmarker. Im obersten Pulszug ist der Zielmodus T dargestellt mit seinen Pulsen im Niederfrequenzbereich. Es sind nicht alle Pulse des Pulszugs dargestellt, wie die Punkte rechts andeuten. Zudem sind die Pulse in Amplitude A und Pulslänge - in FIG 3 die Breite von links nach rechts - in Bezug auf die pulsfreien Zeitspannen nicht maßstäblich dargestellt. Das gilt für alle Pulszüge von FIG 3.

Darunter, also zeitlich unmittelbar nachfolgend, ist ein Pulszug des Lufterkennungsmodus, bzw. Luftgeschwindigkeitsmodus Δv dargestellt mit seinen Pulsen im Hochfrequenzbereich. Darunter, also zeitlich unmittelbar nachfolgend, ist ein Pulszug des Luftortungsmodus bzw. Luftentfernungsmodus Δx dargestellt. Dieser Modus kann - wie auch der Lufterkennungsmodus Δv - mehrere verschiedene Pulsschemata umfassen. Unter dem Luftentfernungsmodus Δx zur Bestimmung der Entfernung oder anders gesagt des Abstands r ist der Luftortungsmodus bzw. Luftwinkelmodus zur Bestimmung der Richtung des vom Angreifer 18, 22 reflektierten Radarsignals in Kugelkoordinaten θ, φ dargestellt. Es ist möglich, diesen Luftwinkelmodus mit anderen Modi, z.B. dem Luftgeschwindigkeitsmodus Δv und/oder dem Luftentfernungsmodus Δx, zu kombinieren, also die Bestimmung der Winkellage in einem oder mehreren der anderen Modi durchzuführen.

Wie in FIG 2 dargestellt ist, wechselt in der zweiten Phase der Lufterkennungsmodus Δv mit dem Zielmodus T ab. Bei diesem Track-While-Scan-Verfahren wird der Luftraum nach möglichen Angreifern 18 gescannt und gleichzeitig, also durch die sich abwechselnden Modi periodisch intermittierend, das Oberflächenziel 4 verfolgt. Ebenfalls in FIG 2 gezeigt ist, dass ein Angreifer 18 vom Oberflächenziel 4 gestartet ist und sich im Anflug auf den Lenkflugkörper 2 befindet, um diesen im Kollisionspunkt 20 zu treffen bzw. zu bekämpfen. Der Angreifer 18 hat eine Relativgeschwindigkeit von beispielsweise 2.000 m/s zum Lenkflugkörper 2, sodass dessen Dopplersignatur in seiner Frequenz eindeutig und leicht von allen anderen Signaturen trennbar ist. Der Angreifer 18 wurde vom Radar 16 erkannt. Nun ist bekannt, dass ein Angreifer 18 auf den Lenkflugkörper 2 zufliegt und auch mit welcher Geschwindigkeit, nicht jedoch seine eindeutige Relativposition in Kugelkoordinaten r, θ, φ zum Lenkflugkörper 2 bzw. in Bezug auf dessen Referenzkoordinatensystem.

Zur Bestimmung der Entfernung wechselt das Radar nach Erkennung des Angreifers 18 vom Lufterkennungsmodus Δv in den Luftortungsmodus Δx. Hierfür wird eine Reduzierung der Pulsfolgefrequenz vorgenommen, da die Entfernung zum Angreifer 18 eindeutig bestimmt werden soll, was im Hochfrequenzmodus mit einem einzigen Pulsschema schwieriger ist. Die Reduzierung auf einen mittleren Entfernungsbereich, den Mittelfrequenzmodus, kann hierbei für die Entfernung zum Angreifer 18 ausreichend sein, sodass die Entfernung eindeutig gemessen werden kann. Die Lage des Seehintergrunds oder des Oberflächenziels 4 wird hierbei nicht mehr eindeutig sein, was aber aufgrund der bekannten Parameter aus den Messungen im Zielmodus T entsprechend korrigiert oder aus der Vermessung des Angreifers 18 entfernt werden kann. Zur Erzielung einer ausreichenden Energie zum Vermessen des Angreifers 18 in dieser tieferen Pulsfrequenz kann die Amplitude A vergrößert werden, wie in FIG 2 nicht maßstäblich dargestellt ist.

Es kann sein, dass die Zeitlage des Radarechos nicht eindeutig ist, z.B. wenn der Angreifer 18 noch zu weit entfernt ist. Abhilfe kann hier die Variation der Pulsschemata schaffen, z.B. durch ein Jittering der Pulsfrequenz, also eine kleine Variation der Pulsfrequenz, in einem oder mehreren nachfolgenden Dwells, wie in FIG 3 beispielhaft dargestellt ist. Auch ist es möglich, die Pulslänge und/oder den Pulsabstand in einem einzigen Dwell zu verändern, wie in FIG 3 ebenfalls beispielhaft zu sehen ist, um zu einem eindeutigen Entfernungsergebnis zu kommen. Auch die Pulsamplitude A kann verändert werden. Auf diese Weise wird die Entfernung des Angreifers 18 vom Lenkflugkörper 2 eindeutig bestimmt. Die Pulsschemata können generell auf das abgeschätzte Echo vom Angreifer 18, 22 und/oder Oberflächenziel 4 abgestimmt sein. Dies kann auch durch eine unterschiedliche Empfangsverstärkung zwischen Signal vom Oberflächenziel 4 und vom Angreifer 18 bzw. von verschieden Angreifern 18, 22 erfolgen. Eine Abstimmung der Pulsamplitude A und/oder Pulsbreite von Radarpulsen des Luftmodus auf das abgeschätzte Echo von dem oder den Angreifern 18, 22 ist insbesondere dann sinnvoll, wenn mehrere Angreifer 18, 22 zu verfolgen sind.

In einem nachfolgenden weiteren Luftortungsmodus Δx wird die Lage des Angreifers 18, beispielsweise relativ zur Längsachse des Lenkflugkörpers 2, bestimmt, beispielsweise deren Kugelkoordinaten r, θ, φ. Nun ist die dreidimensionale Position sowie die Relativgeschwindigkeit des Angreifer 18 bekannt. Die Steuereinheit 12 errechnet daraus den Kollisionspunkt 20 mit dem Angreifer 18 und daraus ein Ausweichmanöver, mit dem der Lenkflugkörper 2 dem Angreifer 18 ausweicht. Die Steuereinheit 12 steuert das Ausweichmanöver durch entsprechende Ansteuerung der Antriebe der Lenkflügel 10. Dies ist in FIG 2 dargestellt. Die jeweils vorgegebene Flugroute 24 für den Lenkflugkörper 2 ist in einer lang gestrichelten Linie wiedergegeben. Die kurz gestrichelte ist die ursprüngliche Flugroute geradlinig zum Oberflächenziel 4. Und eine mittellang gestrichelte ist eine Ausweichroute zum Oberflächenziel 4 nach Ausweichen vor dem Angreifer 18, die jedoch durch einen ballistischen Beschuss kurz vor dem Oberflächenziel 4 nochmals korrigiert werden muss.

Die verschiedenen in FIG 3 gezeigten Pulsschemata können einander abwechseln. So können der Lufterkennungsmodus Δv und der Luftortungsmodus Δx einander abwechseln, wie in FIG 2 beispielhaft für die dritte Phase dargestellt ist. In FIG 3 ist das durch einen nachfolgenden Satz aus Pulszügen dargestellt, wobei der erste Satz nicht vollständig dargestellt sein muss, wie die drei Punkte darunter symbolisieren. Auf diese Weise durchläuft das Radar 16 eine Vielzahl von Pulszugsätzen, in denen sich beispielsweise der Zielmodus T und der Luftmodus mit seinen vielen verschiedenen Pulszügen abwechseln. Die Reihenfolge der verschiedenen Pulszüge, also der verschiedenen Pulsschemata, kann sich hierbei ändern.

Der Zielmodus T kann in die Schematareihenfolge aufgenommen werden. Wahrscheinlich ist jedoch die Verfolgung des Angreifers 18 so aufwändig, dass der Zielmodus T zunächst ausgesetzt wird, weshalb er in FIG 2, dritte Phase, eingeklammert notiert ist. Wenn die Winkellage in in den Kugelkoordinaten θ und φ ermittelt ist, wie in FIG 2 beispielhaft für die vierte Phase dargestellt ist, sollte auch die Entfernung r periodisch ermittelt werden, sodass eine dreidimensionale Ortung erfolgt. Der Zielmodus T und der Lufterkennungsmodus Δv sind hierbei nicht notwendig und können vorerst ausgelassen werden. Da jedoch weitere Angreifer 18, 22 auftauchen können, ist es sinnvoll, zumindest den Lufterkennungsmodus Δv periodisch zu durchlaufen, wobei die Periode nicht identisch mit denen der Luftortung sein muss, sodass eine Vielzahl von Luftortungsschemata durchlaufen werden können, bevor wieder eine neue Lufterkennung bzw. dessen Pulsschema erfolgt. Daher ist der Lufterkennungsmodus Δv einfach eingeklammert und der Zielmodus T zweifach, da der Lufterkennungsmodus Δv wichtiger ist als der Zielmodus T.

Es kann durchaus sein, dass zwei oder mehr Angreifer 18 in Form von Lenkflugkörpern erkannt werden. Da ein später startender Angreifer 18 zu Beginn seiner Trajektorie langsamer als ein zuvor gestarteter Angreifer 18, also mit geringerer Relativgeschwindigkeit, auf den Lenkflugkörper 2 zufliegt, sind beide Dopplersignaturen im Frequenzbild des Radars 16 eindeutig voneinander trennbar, sodass beide Angreifer 18 einzeln vom Lenkflugkörper 2 erkannt werden. Da sie verschieden weit entfernt vom Lenkflugkörper 2 sind, ist es sinnvoll, die Pulsfrequenz im Luftortungsmodus Δx an beide Angreifer 18 anzupassen, damit einerseits beide eindeutig in ihrer jeweiligen Entfernung r bestimmt werden können und andererseits die Pulsfolge aus Energie- und Zeitgründen möglichst schnell ist. Es ist insofern sinnvoll, dass das Erkennen eines weiteren Angreifers 18 eine Erweiterung des Luftmodus auf eine größere Anzahl verschiedener Pulsschemata triggert.

Während der Annäherung an den Kollisionspunkt 20 und auch beim Erkennen mehrerer Angreifer 18, 22, die zeitgleich angreifen, erhöht sich das Gefahrenpotenzial für den Lenkflugkörper 2. Um hierbei die richtigen Messungen auszuführen, ist es sinnvoll, eine Gefahrenpriorität zu setzen. Dies kann durch die Steuereinheit 12 erfolgen. Beispielsweise ist die Gefahrenpriorität eines nahen Angreifers 18 höher als die eines weiter entfernten Angreifers 18, 22, da zunächst der nahe Angreifer 18 umflogen werden muss und dann noch Zeit ist, die Positionen der nachfolgenden Angreifer 18, 22 zu bestimmen. Wenn die Pulsschemata an die einzelnen Angreifer 18, 22 angepasst sind, ist es vorteilhaft, wenn diese hintereinander in der Reihenfolge einer Gefahrenpriorität durchlaufen werden. Jedem Schema kann je nach Bedrohung eine Priorität gegeben werden und es wird entsprechend durchgeführt. Auf diese Weise kann die Reihenfolge der Pulsschemata wechseln, wenn sich die Bedrohungslage ändert und damit die Gefahrenprioritäten.

Wenn der Lenkflugkörper 2 den Kollisionspunkt 20 erfolgreich umflogen und den oder alle Angreifer 18 hinter sich zurückgelassen hat, ist eine Luftortung nicht mehr nötig, sodass der Luftmodus wieder in den Lufterkennungsmodus Δv zurückfallen kann, um einen neuen Angreifer 18 aufzuspüren, zweckmäßigerweise im Wechsel mit dem Zielmodus T, wie in der fünften Phase in FIG 2 angegeben ist.

In der Nähe des Oberflächenziels 4 kann es sein, dass Angreifer 22 in Form von Geschossen auf den Lenkflugkörper 2 zufliegen, die vom Oberflächenziel 4 in Richtung auf den Lenkflugkörper 2 abgeschossen wurden. Auch diese Geschosse können durch den Lufterkennungsmodus Δv erkannt werden, da sie sich mit hoher Relativgeschwindigkeit auf den Lenkflugkörper 2 zu bewegen und daher trotz ihrer sehr geringen Radarsignatur im Dopplersignal des Radarechos eine Signatur haben. In der Regel ist bekannt, mit welcher Geschwindigkeit Geschosse die Rohrmündung verlassen, und somit ihre Relativgeschwindigkeit zum Lenkflugkörper 2. Die Frequenz der erwarteten Dopplersignatur ist daher bekannt. Die Untersuchung des Radarechos kann daher auf ein engeres Frequenzband beschränkt bleiben als bei einem Suchen nach einem Angreifer 18 in Form eines Lenkflugkörpers, wodurch die Sensitivität der Lufterkennung erhöht werden kann. Selbstverständlich kann bei der Suche nach einer Dopplerfrequenzsignatur im Radarecho selektiv nur ein oder mehrere infrage kommende Frequenzbänder untersucht werden. Bei einem möglicherweise startenden Lenkflugkörper ist dieses tiefer, als bei einem gerade abgefeuerten Geschoss. Da die Relativgeschwindigkeiten beim Start, also beim ersten Erkennen, bekannt sind, kann das oder die Frequenzbänder gezielt und begrenzt zur Untersuchung nach der Dopplerfrequenzsignatur ausgewählt werden.

Bei Geschossen kann zudem die Kenntnis einer Kadenz des Abschusses als Zusatzinformation herangezogen werden, aus der sich in Verbindung mit der Fluchtgeschwindigkeit des Geschosses vor dem Rohr die Abstände zwischen den einzelnen Geschossen ergeben. Auf eine Entfernungsbestimmung jedes einzelnen Geschosses kann daher verzichtet werden, wenn Grundinformationen über eine Entfernung und eine Kadenz vorliegen. Auch bei einem Beschuss durch Angreifer 22 berechnet der Lenkflugkörper 2 bzw. dessen Steuereinheit 12 wie oben beschrieben einen Kollisionspunkt 26 und daraus eine neue Flugroute 28 zum Umfliegen des Kollisionspunkts 26.

### Bezugszeichenliste

- 2: Lenkflugkörper
- 4: Oberflächenziel
- 6: Raketenmotor
- 8: Wirkkörper
- 10: Lenkflügel
- 12: Steuereinheit
- 14: Suchkopf
- 16: Radar
- 18: Angreifer
- 20: Kollisionspunkt
- 22: Angreifer
- 24: Flugroute
- 26: Kollisionspunkt
- 28: Flugroute
- A: Amplitude
- Δv: Lufterkennungsmodus, Luftgeschwindigkeitsmodus
- Δx: Luftortungsmodus, Luftentfernungsmodus
- r, φ, θ: Kugelkoordinaten (Entfernung, Winkelkoordinaten)
- t: Zeit
- T: Zielmodus

## Patentansprüche

1. Verfahren zum Lenken eines Lenkflugkörpers (2) in Richtung zu einem Oberflächenziel (4), bei dem der Lenkflugkörper (2) ein aktives Radar (16) zur Erkennung des Oberflächenziels (4) einsetzt,
**dadurch gekennzeichnet,**
**dass** das Radar (16) von einem an die Erkennung des Oberflächenziels (4) angepassten Zielmodus (T) auf einen auf einen Angreifer (18, 22) aus der Luft angepassten, sendeschemaveränderten Luftmodus zur Erkennung des Angreifers (18, 22) wechselt.

2. Verfahren nach Anspruch 1,
**dadurch gekennzeichnet,**
**dass** eine erstmalige Erkennung des Angreifers (18, 22) mithilfe eines Dopplermodus des Radars ausgeführt wird, bei dem die Dopplersignatur des Empfangssignals des Radars (16) ausgewertet wird.

3. Verfahren nach Anspruch 1 oder 2,
**dadurch gekennzeichnet,**
**dass** der Lenkflugkörper (2) den Luftraum zwischen sich und dem Oberflächenziel (4) mithilfe des Luftmodus überwacht, der einen in der Entfernung zum Oberflächenziel (4) in der Pulsfolgefrequenz uneindeutiges Pulsschema enthält.

4. Verfahren nach einem der vorhergehenden Ansprüche,
**dadurch gekennzeichnet,**
**dass** der Lenkflugkörper (2) periodisch zwischen einem Verfolgen des Oberflächenziels (4) im Zielmodus (T) und dem Scannen des Luftraums im Luftmodus wechselt.

5. Verfahren nach einem der vorhergehenden Ansprüche,
**dadurch gekennzeichnet,**
**dass** das erstmalige Erkennen des Angreifers (18, 22) eine Erweiterung des Luftmodus auf zumindest zwei verschiedene Pulsschemata triggert.

6. Verfahren nach einem der vorhergehenden Ansprüche,
**dadurch gekennzeichnet,**
**dass** eine Entfernungsbestimmung des Angreifers (18) unter Verwendung verschiedener Pulslängen, Pulscodes, Radarfrequenzen, Pulsphasen und/oder Pulsamplituden (A), insbesondere innerhalb eines Dwells, erfolgt.

7. Verfahren nach einem der vorhergehenden Ansprüche,
**dadurch gekennzeichnet,**
**dass** das Erkennen eines weiteren Angreifers (18, 22) eine Erweiterung des Luftmodus auf eine größere Anzahl verschiedener Pulsschemata triggert.

8. Verfahren nach einem der vorhergehenden Ansprüche,
**dadurch gekennzeichnet,**
**dass** der Luftmodus mehrere in der Pulsfolgefrequenz unterschiedliche Pulsschemata aufweist, die einander abwechseln.

9. Verfahren nach einem der vorhergehenden Ansprüche,
**dadurch gekennzeichnet,**
**dass** die Winkellage zum Ort des Angreifers (18, 22) insbesondere in Kugelkoordinaten φ, θ, durch digitales Verschwenken der Radarkeule des Radars (16) bestimmt wird.

10. Verfahren nach einem der vorhergehenden Ansprüche,
**dadurch gekennzeichnet,**
**dass** Zielmodus (T) und Luftmodus einander abwechseln, wobei mehrere verschiedene Pulsschemata des Luftmodus vor einem nachfolgenden Zielmodus (T) durchlaufen werden.

11. Verfahren nach einem der vorhergehenden Ansprüche,
**dadurch gekennzeichnet,**
**dass** der Luftmodus einen Luftgeschwindigkeitsmodus (Δv) und einen Luftentfernungsmodus (Δx) enthält und der Lenkflugkörper (2) den Angreifer (18, 22) mit diesen beiden Luftmodi (Δv, Δx) bis zu einem Vorbeiflug verfolgt unter Weglassen des Zielmodus (T), und dieser erst nach dem Vorbeiflug in den Modenzyklus wieder aufgenommen wird.

12. Verfahren nach einem der vorhergehenden Ansprüche,
**dadurch gekennzeichnet,**
**dass** der Luftmodus mehrere Pulsschemata aufweist, die hintereinander in der Reihenfolge einer Gefahrenpriorität durchlaufen werden.

13. Verfahren nach einem der vorhergehenden Ansprüche,
**dadurch gekennzeichnet,**
**dass** eine Pulsamplitude (A) und Pulsbreite von Radarpulsen des Luftmodus auf das abgeschätzte Echo vom Angreifer (18, 22) abgestimmt sind.

14. Verfahren nach einem der vorhergehenden Ansprüche,
**dadurch gekennzeichnet,**
**dass** der Angreifer (22) mehrere hintereinander fliegende Geschosse enthält und der Lenkflugkörper (2) deren Entfernung unter Verwendung der Abschusskadenz der Geschosse ermittelt.

15. Lenkflugkörper (2) mit einem Suchkopf (14), der ein aktives Radar (16) zur Erkennung eines Oberflächenziels (4) enthält, und einer Steuereinheit (12), die zum Lenken eines Flugs in Richtung zu einem Oberflächenziel (4) vorbereitet ist,
**dadurch gekennzeichnet,**
**dass** die Steuereinheit (12) dazu vorbereitet ist, das Radar (16) von einem an die Erkennung des Oberflächenziels (4) angepassten Zielmodus (T) auf einen auf einen Angreifer (18, 22) aus der Luft angepassten, sendeschemaveränderten Luftmodus zur Erkennung des Angreifers (18, 22) wechseln zu lassen.
